# EUROPEAN PATENT APPLICATION

(11) **EP 4 692 405 A1**
(43) Date of publication of application: **11.02.2026**
(21) Application number: 24777991.1
(22) Date of filing: 26.03.2024
(51) Int. Cl.: C22C 38/18, C22C 38/38, C22C 38/02, C22C 38/04, C22C 38/06, C22C 33/00, C21D 8/02

(54) **COATED ULTRAHIGH-STRENGTH STEEL WITH EXCELLENT SPOT WELDING PERFORMANCE AND MANUFACTURING METHOD THEREFOR**

(30) Priority: 27.03.2023 CN 202310306574
(71) Applicant: Baoshan Iron & Steel Co., Ltd., Shanghai 201900 (CN)
(72) Inventor: PAN, Hua, Shanghai 201900 (CN); LEI, Ming, Shanghai 201900 (CN); WANG, Li, Shanghai 201900 (CN); GONG, Tao, Shanghai 201900 (CN); JIANG, Haomin, Shanghai 201900 (CN)
(74) Representative: Kuhnen & Wacker Patent- und Rechtsanwaltsbüro PartG mbB
(86) International application number: PCT/CN2024/083714
(87) International publication number: WO 2024/199203

(57) **Abstract**

Disclosed in the present invention is coated ultrahigh-strength steel with excellent spot welding performance, comprising a steel substrate and a zinc-containing coating on the surface of the steel substrate. The steel substrate contains Fe and inevitable impurity elements. The steel substrate further contains the following chemical elements in percentage by mass: 0.10-0.22% of C, 0.30-0.79% of Si, 1.00-2.50% of Mn, 0.50-5.00% of Cr, and 0.03-1.0% of Al. Correspondingly, further disclosed in the present invention is a manufacturing method for the coated ultrahigh-strength steel. The coated ultrahigh-strength steel of the present invention can be effectively prepared by using the manufacturing method, and when a final finished product of the coated ultrahigh-strength steel is welded by means of a spot welding process, if a joint surface crack is generated, the maximum depth of the joint surface crack is smaller than 5% of the plate thickness.

## Description

### Technical Field

The present disclosure relates to a high strength steel and a manufacturing method therefor, in particular to an ultra-high-strength steel having a coating and a manufacturing method therefor.

### Background Art

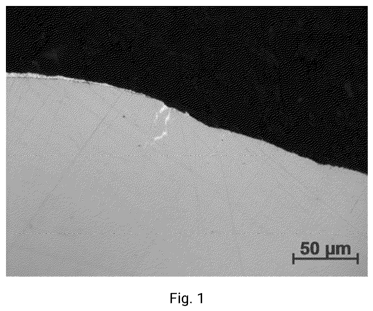

With the advancement of the lightweight automobile process, as well as the requirement of automotive industry for improved vehicle corrosion resistance, many car companies have become more and more demanding for ultra-high strength steel with a coating. For cold-stamped steel, the coating is mainly a zinc-containing coating, such as a coating of hot-dip pure zinc, hot-dip galvanized iron and electroplating pure zinc. Resistance spot welding has become the most important connection method in automobile welding production due to its advantages of fast welding speed and low cost, etc. Joints of many ultra-high-strength steel with a zinc-containing coating often show good quasi-static mechanical properties during spot welding, but a kind of welding cracks appears on the surface of the steel plate in contact with electrodes and the nearby area, and this kind of welding cracks is called spot welding cracks. Figure 1 schematically shows the spot-welding cracks of ultra-high-strength steel with a zinc coating. However, it is very difficult to suppress the formation of such cracks. Therefore, this kind of cracks has become an important obstacle and bottleneck for the application of ultra-high-strength steel with a zinc-containing coating in the automotive field.

Some technical solutions are known in the prior art to control welding cracks, but there are still many shortcomings:
For example, the Chinese patent document with the publication number of CN108015401A, published on May 11, 2018, and titled "Resistance spot welding method of galvanized high-strength steel with good joint performance", discloses a method for inhibiting spot-welding surface cracks while ensuring that the performance of the solder joint is not reduced through spot welding process innovation.

For another example, the Chinese patent document with the publication number CN109385515A, published on February 26, 2019, and titled "Multilayer steel and method for reducing liquid metal embrittlement", discloses a method for suppressing the generation of spot welding cracks in high-strength steel, which inhibits the occurrence of spot welding cracks by first decarburizing and then galvanizing the high-strength steel, so as to control the thickness of the decarburized layer between 10 and 50 microns.

For another example, the Chinese patent document with the publication number of CN110892087A, published on March 17, 2020, and titled "Zinc-coated steel plate with high resistance spot weldability", discloses a technical solution for forming an internal oxide layer in the steel plate by increasing the dew point, so as to improve the distribution of surface components, thereby reducing the occurrence of spot-welding cracks. However, the technical solution has the problem that it is difficult to control the thickness and uniformity of the internal oxide layer and the uniformity of the distribution of the surface components of the steel plate.

Based on this, it is expected to provide an ultra-high-strength steel having a coating, which not only possesses ultra-high strength but also has excellent spot-welding performance.

### Summary

One of the objects of the present disclosure is to provide an ultra-high-strength steel having a coating with excellent spot-welding performance. It satisfies the requirements for the performance of coated high-strength steel and the mechanical properties of spot-welding joints, while having low spot-welding crack sensitivity.

In order to achieve the above purpose, the present disclosure provides an ultra-high-strength steel having a coating with excellent spot-welding performance, which comprises a steel substrate and a zinc-containing coating on the surface of the steel substrate, wherein the steel substrate comprises Fe and unavoidable impurity elements, and the steel substrate further comprises the following chemical elements in a mass percentage:
C: 0.10~0.22%; Si: 0.30~0.79%; Mn: 1.00~2.50%; Cr: 0.50~5.00%; Al: 0.03~1.0%.

Further, in the ultra-high-strength steel having a coating of the present disclosure, the steel substrate comprises each chemical element in a mass percentage as follows:
C: 0.10~0.22%; Si: 0.30~0.79%; Mn: 1.00~2.50%; Cr: 0.50~5.00%; Al: 0.03~1.0%; with a balance of Fe and unavoidable impurity elements.

Further, in the ultra-high-strength steel having a coating of the present disclosure, wherein the mass percentage of each chemical element of the steel substrate satisfies at least one of the following items:
C: 0.15~0.20%;
Si: 0.50~0.79%;
Mn: 1.00~2.00%;
Cr: 1.00~3.00%.

The present disclosure adopts a composition design mainly based on carbon, silicon, manganese and chromium, and is supplemented by the process proposed in the present disclosure. It makes full use of the role of carbon, silicon, manganese, chromium elements in the phase transformation of the material, thereby realizing the unification of high mechanical properties and high spot-welding performance in the ultra-high-strength steel of the present disclosure, and finally obtaining an ultra-high-strength steel product having a coating with excellent spot-welding performance.

The chemical elements in the ultra-high-strength steel having a coating of the present disclosure are designed according to the following principles:
C: In the ultra-high-strength steel having a coating with low sensitivity to spot-welding cracks of the present disclosure, the solubility of carbon in austenite is much higher than that in ferrite, which can prolong the gestation period before the austenite transition and reduce the Ms temperature. The higher the mass percentage of carbon in the steel, the higher the fraction of residual austenite, and the higher the enrichment degree of carbon in residual austenite during partitioning, which is conducive to enhancing the stability of residual austenite, producing the TRIP effect and improving the ductility of the material. In addition, carbon is also the most basic solid solution-strengthening element in steel. However, for the component system of the present disclosure, when the carbon content in the steel is too high, a large number of twinning tend to form after quenching (i.e., the rapid cooling to 200-300 °C at a cooling rate of 50-500 °C/s, which is mentioned later in the present disclosure), which increases the crack sensitivity of the plate. Therefore, the mass percentage of the C element in the present disclosure is controlled at 0.10~0.22%.

Of course, the mass percentage of the C element can be further preferably controlled at 0.15~0.20%.

Si: In the ultra-high-strength steel having a coating with excellent spot-welding performance of the present disclosure, the solubility of silicon in carbides is very small. Si can strongly inhibit the formation of cementite during the partitioning treatment, promote the enrichment of carbon into the residual austenite, and improve the stability of the residual austenite. However, an overly high mass percentage of silicon will reduce the high-temperature plasticity of the steel, and form a stable oxide on the surface of the steel plate to reduce the wettability of the steel plate. In particular, the inventors in this case found that silicon is an element that significantly increases the tendency of cracks on the surface of solder joint. Therefore, the mass percentage of the Si element in the present disclosure is controlled at 0.30~0.79%.

Of course, the mass percentage of the Si element can be further preferably controlled at 0.5~0.79%.

Mn: In the ultra-high-strength steel having a coating with excellent spot-welding performance of the present disclosure, manganese can expand the austenite phase zone, reduce the Ac₃, Mₛ and M_{f} points, improve the austenite stability and hardenability of steel, and reduce the critical transition rate, which is conducive to the preservation of residual austenite at room temperature. At the same time, manganese can also play a solid solution strengthening effect in steel. However, when the mass percentage of manganese in the steel is too high, it will aggravate the grain coarsening trend, reduce the plasticity and toughness of the steel, and deteriorate the corrosion resistance, especially will increase the enrichment of manganese in the superficial layer of the base metal under the coating, increase the sensitivity to cracks on the surface of solder joint of the joint, and deteriorate the welding performance. However, when the content of Mn in steel is too low, the ferrite and pearlite band structure will be formed at low cooling velocity due to segregation. Therefore, the mass percentage of the Mn element in the present disclosure is controlled at 1.00~2.50wt%.

Of course, the mass percentage of the Mn element can be further preferably controlled at 1.00~2.00%.

Cr: In the ultra-high-strength steel having a coating with excellent spot-welding performance of the present disclosure, chromium increases the strength and hardness of the steel without reducing its plasticity and toughness. More importantly, chromium can address the issue of reduced hardenability of the steel caused by decreased manganese addition, which is intended to mitigate manganese enrichment beneath the coating. Chromium can enhance the hardenability of the steel and exert a secondary hardening effect, enabling an increase in the hardness and wear resistance of carbon steel without causing brittleness. Chromium element can expand the γ phase region, improve hardenability and hot strength, reduce the temperature range for the existence of the δ phase region at high temperatures, promote the progression of transformation of *δ→γ,* and inhibit the precipitation of high-temperature δ ferrite. Additionally, the inventors have also found that with the increase in chromium content, the tendency of surface cracks occurring at the welding spots of the high-strength steel decreases. However, the chromium content in carbon steel should not be excessively high either. Therefore, the mass percentage of chromium in the present disclosure is controlled at 0.50-5.00wt%.

Of course, the mass percentage of the Cr element can be further preferably controlled at 1.00~3.00%.

Al: In the ultra-high-strength steel having a coating with excellent spot-welding performance of the present disclosure, when aluminum exists in a solid solution state, it can increase the stacking fault energy, inhibit the precipitation of cementite and the transition from γ to martensite, and improve the stability of austenite. Moreover, aluminum forms fine and diffusely distributed insoluble mass points with carbon and nitrogen that can refine the grains, but the strengthening effect of aluminum is weaker than that of silicon, and its ability to stabilize austenite is also weaker than that of silicon. In addition, when the mass percentage of aluminum in steel is too high, it is easy to form a large number of oxide inclusions, which is not conducive to continuous casting for steelmaking. Therefore, the mass percentage of the Al element is controlled at 0.03~1.00%.

Further, in the ultra-high-strength steel having a coating of the present disclosure, the mass percentage of chemical element of the steel substrate satisfies at least one of the following items:
0<Mo≤0.03%;
0<Nb≤0.03%.
0<Ti≤0.03%;
0<V≤0.03%;
0<B≤0.001%, for example 0<B<0.001%.

Molybdenum, niobium, titanium, vanadium, and boron can further enhance the properties of the ultrahigh-strength steel having a coating of the present disclosure. Among these elements, molybdenum can improve the hardenability of the steel and adjust its strength. However, an excessively high mass percentage of molybdenum will lead to an increase in the cold rolling deformation resistance of the steel. Niobium, titanium, and vanadium can form fine carbides with carbon, thereby promoting refinement of the microstructure. However, the formation of such fine carbides is detrimental to the enrichment of carbon in residual austenite and the stabilization of residual austenite. Boron can significantly improve the hardenability of steel. Boron is easy to segregate at grain boundaries, which fills grain boundary defects and reduces grain boundary energy. It increases the difficulty of new phase nucleation on austenite grain boundaries where ferrite nucleation originally takes place, and enhances austenite stability, thereby improving hardenability. But more boron is not always better. When the grain boundary defects are filled, if there are still more non-equilibrium segregation of boron, the "boron phase" precipitation will be formed at the grain boundary, increasing the grain boundary energy. At the same time, the "boron phase" will be used as a core of new phase, which will increase the nucleation velocity, reduce the stability of austenite, and reduce the hardenability. And a large amount of "boron phase" precipitation will make the steel brittle, which will have a bad impact on the mechanical properties of steel.

Furthermore, the addition of the aforementioned elements will increase the material cost. Considering the balance between the material's service performance and cost control, at least one of the aforementioned elements can be optionally added, with its content controlled within the above-specified range.

In the present disclosure, when the steel substrate contains Mo, the mass percentage of Mo may be 0.001%~0.03%. When the steel substrate contains Nb, the mass percentage of Nb may be 0.001%~0.03%. When the steel substrate contains Ti, the mass percentage of Ti may be 0.001%~0.03%. When the steel substrate contains V, the mass percentage of V may be 0.001%~0.03%. When the steel substrate contains B, the mass percentage of B may be 0.0001%~0.001%, e.g., 0.0001%-0.0009%.

Further, in the ultra-high-strength steel having a coating of the present disclosure, the mass percentage of the unavoidable impurity elements of the steel substrate satisfies: P≤0.01%, S≤0.01%, N≤0.003%.

In the above technical solution, P, S and N elements are the impurity elements in the ultra-high-strength steel having a coating of the present disclosure, and if technical conditions permit, in order to obtain the steel with better performance and better quality, the content of impurity elements in the ultra-high-strength steel having a coating should be reduced as much as possible.

Among them, although P can play a role in solid solution strengthening, inhibit the formation of carbides and is conducive to improving the stability of residual austenite, an overly high mass percentage of P will weaken the grain boundaries, increase the brittleness of the material, and deteriorate the welding performance. That is to say, the positive effect of the P element is weaker than its negative effect. Therefore, the P mass percentage is preferably controlled at P≤0.01%.

The S element in the steel is easy to form low-melt eutectic at the grain boundaries, and the plasticity of the material will be significantly deteriorated when its mass percentage is too high. Therefore, the mass percentage of the S element is controlled at S≤0.01%.

When the mass percentage of N is too high, it causes difficulties in steelmaking and continuous casting, and is detrimental to the control of inclusions. Therefore, it is preferable to control the mass percentage of nitrogen to N≤0.003wt%.

Further, in the ultra-high-strength steel having a coating of the present disclosure, the microstructure of the steel substrate is ferrite + martensite + residual austenite.

Further, in the ultra-high-strength steel having a coating of the present disclosure, the volume fraction of ferrite is 25%~45%; and/or the volume fraction of martensite is 45%~65%.

Further, in the ultra-high-strength steel having a coating of the present disclosure, in ferrite, the volume of grains having a size of 10 µm or less accounts for ≥85%, and the volume of grains having a size of 5 µm or less accounts for ≥55%. In some embodiments, in ferrite, the volume fraction of grains with a size of 10 µm or less is 85~96%. In some embodiments, in ferrite, the volume fraction of grains with a size of 5 µm or less is 55-75%.

Further, in the ultra-high-strength steel having a coating of the present disclosure, the residual austenite has an average grain size of ≤ 2 µm; and/or the residual austenite has an average C content of ≥1.0%. In some embodiments, the average C content in the residual austenite is between 1.0%~1.30%, for example, 1.0%~1.28%.

Further, in the ultra-high-strength steel having a coating of the present disclosure, when spot-welding is adopted for welding, if cracks on the surface of solder joint are generated, the maximum depth of the cracks on the surface of solder joint is less than 5% of the plate thickness.

Further, in the ultra-high-strength steel having a coating of the present disclosure, its mechanical properties satisfy: a yield strength of 600MPa~850MPa, a tensile strength of 980MPa~1150MPa, a uniform elongation of no less than 13%, an elongation at break of no less than 15%.

Further, in the ultra-high-strength steel having a coating of the present disclosure, its mechanical properties satisfy: a yield strength of ≥750MPa; a tensile strength of ≥1000MPa; a uniform elongation of ≥14.5%; an elongation at break of ≥22%.

Further, in the ultra-high-strength steel having a coating of the present disclosure, the coating is a pure zinc coating, a zinc-iron alloy coating, a zinc-aluminum-magnesium coating or an aluminum-zinc coating. Among them, the pure zinc coating can be either a hot-dip galvanized coating or an electrogalvanized coating.

Accordingly, another object of the present disclosure is to provide a method for manufacturing the ultra-high-strength steel having a coating, which is simple for production, and can provide high-strength steel having significantly improved spot-welding performance, especially the resistance of cracks on the surface of solder joint while having the same mechanical properties.

To achieve the above purpose, the present disclosure provides a manufacturing method for the ultrahigh-strength steel having a coating, which comprises steps of:
(1) smelting and continuously casting into steel billets;
(2) heating;
(3) hot-rolling: wherein the thickness of oxide scale on the surface of the strip steel after hot rolling is controlled at ≤4µm, and the mass percentage of FeO + Fe₃O₄ in the oxide scale on the surface of the strip steel after hot rolling is ≤50wt%;
(4) pickling, or pickling + cold rolling;
(5) continuous annealing: wherein the steel is annealed at 800~920 °C, then slowly cooled to 700~770 °C at a cooling rate of 3~10 °C/s; then rapidly cooled to 200~300°C with a cooling rate of 50~500°C/s; then re-heated to 360~460°C, held for 50~600s; and finally cooled to room temperature;
(6) plating a zinc-containing coating.

The manufacturing method of the present disclosure can obtain an ultra-high-strength steel having a coating with low spot-welding crack sensitivity. The ultra-high-strength steel having a coating produced by this manufacturing method can be welded using the conventional spot-welding process of car factories, and the maximum depth of the crack on the surface of solder joint is less than 5% of the plate thickness, which has a very low spot-welding crack sensitivity.

In step (2), the thickness of oxide scale on the surface of the strip steel after hot rolling is controlled at ≤4µm, and the (FeO+ Fe₃O₄) in the oxide scale on the surface of the strip steel after hot rolling is ≤50wt%, which is conducive to the implementation of subsequent steps, and has an important influence on the properties of the steel plate obtained after continuous annealing. It is because that in the technical solution of the present disclosure, FeO, Fe₃O₄ are more difficult to be pickled than Fe₂O₃. Controlling the thickness of the oxide scale on the surface of the strip steel after hot rolling and the (FeO+Fe₃O₄) in the oxide scale on the surface of the strip steel after hot rolling prepared by the present disclosure to be ≤50wt%, can effectively improve the pickling effect, and obtain the surface of the pickled plate that can be used for direct continuous annealing. Because the pickled plate can be directly subjected to continuous annealing, the deformation rate of the hot-rolled microstructure is small, and the microstructure of the steel plate is dominated by pearlite and ferrite. Therefore, under the same continuous annealing conditions, the strength of the material can be reduced, so as to provide more uniform microstructure, thereby obtaining excellent ductility.

The present disclosure has carried out an optimized design for the continuous annealing process. A homogenized austenite or austenite + ferrite structure can be formed by controlling the annealing temperature of 800~920 °C for annealing. Then, the ferrite content in the structure can be further adjusted by slowly cooling the steel to 700~770°C at a cooling rate of 3~10°C/s to obtain a certain proportion of ferrite, so as to improve the plasticity of the material. After that, it is cooled to 200~300°C (that is, between Mₛ (the start temperature of martensite transition) and M_{f} (the end temperature of martensite transition)) at a rate of 50~500°C/s. At this time, a part of austenite is transformed into martensite, which can ensure the high strength of the steel. After that, it is re-heated to 360~460°C and held for 50~600s, which can partition carbon in martensite and austenite to form a certain amount of carbon-rich residual austenite that can be stably maintained to room temperature. Due to the TRIP effect, the work hardening ability and formability of the steel can be significantly improved, and the high-strength steel plate with excellent ductility can be obtained.

In addition, in view of the inventors' understanding of the influence of carbon, silicon, manganese, chromium on cracks on the surface of solder joint, especially the understanding that it is easy to enrich silicon and manganese in the superficial layer of the steel plate to significantly increase the sensitivity to cracks on the surface of solder joint, the present disclosure not only limits the content of carbon, silicon, manganese, chromium of the steel in the composition design, but also reduces the content of carbon, silicon and manganese elements compared with the same strength grade of steel, and adds chromium element to increase the hardenability of the steel, so as to ensure that the plate having a zinc-containing coating has low sensitivity to cracks on the surface of solder joint, and the maximum depth value of cracks on the surface of solder joint is less than 5% of the plate thickness.

It should be noted that when the zinc-containing coating is plated in step (6), the zinc-containing coating can be produced by but not limited to hot dipping, electroplating and vacuum evaporating technology.

Because the ultra-high-strength steel having a coating designed in the present disclosure adopts a design of carbon, silicon, manganese and chromium as well as ferrite grain refinement, during the continuous annealing process, the nucleation point of austenite reverse phase transition increases, and the grain size can be further refined, the average grain size of the residual austenite that can be stably maintained to room temperature is ≤ 2 µm and the average C content in the residual austenite is ≥ 1.0%.

Further, in the method for manufacturing the ultra-high-strength steel having a coating of the present disclosure, in step (2), a slab is heated to 1200~1300°C.

Further, in the method for manufacturing the ultra-high-strength steel having a coating of the present disclosure, in step (3), the rolling-end temperature is controlled at 860~930°C, the coiling temperature is controlled at 450~600°C.

Further, in the method for manufacturing the ultra-high-strength steel having a coating of the present disclosure, in step (4), when pickling + cold rolling is adopted, the cold rolling deformation rate is controlled at 40%~60%.

Further, in the method for manufacturing the ultra-high-strength steel having a coating of the present disclosure, the annealing process parameters of step (5) satisfy at least one of the following items:
an annealing temperature of 820~870°C;
slowly cooled to 700~730°C at a cooling rate of 3~10°C/s;
rapidly cooled to 250~300°C;
re-heated to 400~430°C after rapid cooling, held for 180~300s;
the volume content of hydrogen in the reducing atmosphere in the continuous annealing furnace is controlled at 10~15%.

The ultra-high-strength steel having a coating of the present disclosure, and the manufacturing method therefor have the following advantages and beneficial effects:
The ultra-high-strength steel having a coating of the present disclosure is based on carbon, silicon, manganese, and chromium in its composition design. Without adding expensive alloying elements, by optimizing the proportion of carbon, silicon, manganese and chromium, it obtains a ultra-high-strength cold-rolled steel having a coating with excellent spot-welding performance.

The ultra-high-strength steel having a coating described in the present disclosure has excellent quality and performance, which meets the user's requirements for the performance of high-strength steel having a coating and the mechanical properties of spot-welded joints, and also has low sensitivity to spot-welding cracks.

The ultra-high-strength steel having a coating prepared by this technical solution of the present disclosure comprises a steel substrate and a zinc-containing coating on the surface of the steel substrate, and its mechanical properties satisfy: a yield strength of 600MPa~850MPa, a tensile strength of 980MPa~1150MPa, a uniform elongation of not less than 13%, and an elongation at break of not less than 15%. In addition, when the spot-welding process is actually used for welding, if cracks on the surface of solder joint are generated, the maximum depth of the cracks on the surface of solder joint is less than 5% of the plate thickness.

The production process of the manufacturing method designed by the present disclosure is simple, and the obtained high-strength steel has significantly improved resistance to spot-welding cracks under the same mechanical properties, and will have a good application prospect in the production of safety structural parts for downstream users.

### Description of the drawings

Fig. 1 schematically shows the spot-welding cracks in the ultra-high-strength steel having a zinc-containing coating layer.

### Detailed Description

The ultra-high-strength steel having a coating with excellent spot-welding performance and the manufacturing method therefor of the present disclosure will be further explained and interpreted below in conjunction with the specific examples of the description, but the explanation and interpretation do not constitute an undue limitation to the technical solution of the present disclosure.

### Examples 1-28 and Comparative Examples 1-4

The ultra-high-strength steel having a coating of Examples 1-28 of the present disclosure and the comparative steel of Comparative Examples 1-4 were prepared by the following steps:
(1) smelting and continuously casting into steel billets were performed according to the chemical compositions and ratios shown in Table 1.
(2) heating: wherein a slab was heated to 1200~1300°C.
(3) hot-rolling: wherein the thickness of oxide scale on the surface of the strip steel after hot rolling was controlled at ≤4µm, (FeO+ Fe₃O₄) in the oxide scale on the surface of the strip steel after hot rolling was ≤50wt%, the rolling-end temperature was controlled at 860~930°C and the coiling temperature was controlled at 450~600°C.
(4) pickling, or pickling + cold rolling: when pickling + cold rolling was adopted, the cold rolling deformation rate was controlled to be 40%~60%, and when the steel was galvanized with zinc or zinc alloy directly after pickling, the cold rolling deformation rate in Table 2-2 was 0.
(5) continuous annealing: wherein the volume content of hydrogen in the reducing atmosphere in the continuous annealing furnace was controlled to be 10~15%; wherein the steel was annealed at 800~920 °C, preferably the annealing temperature being controlled at 820~870 °C, then slowly cooled to 700~770 °C at a cooling rate of 3~10 °C/s to obtain a certain percentage of ferrite, wherein the cooling-end temperature of slow cooling was preferably controlled at 700~730°C; then rapidly cooled to 200~300°C with a cooling rate of 50~500°C/s so as to convert part of austenite into martensite, wherein the cooling-end temperature of rapid cooling was preferably controlled at 250~300°C; then re-heated to 360~460°C after rapid cooling, preferably 400~430°C, held for 50~600s, preferably 180~300s; and finally cooled to room temperature.
(6) plating a coating of zinc or zinc alloy, wherein the coating may be specifically selected as a pure zinc coating, a zinc-iron alloy coating, a zinc-aluminum-magnesium coating or an aluminum-zinc coating.

It should be noted that, in the present disclosure, the chemical composition and related process parameters adopted for the ultra-high-strength steel having a coating of Examples 1-28 all met the control requirements designed in the present disclosure. Correspondingly, there were parameters in the chemical composition and related process parameters adopted for the comparative steel of Comparative Examples 1-4 that did not meet the requirements designed in the present disclosure.

The coatings of the steels in Examples 1-28 and Comparative Examples 1-4 were all hot-dip pure zinc coatings.

Table 1 listed the mass percentage of each chemical element of the ultra-high-strength steel having a coating of Examples 1-28 and the comparative steel of Comparative Examples 1-4.

**Table 1. (wt.%, the balance of Fe and other unavoidable impurities except P, S, N)**

| Ex. | C | Si | Mn | Cr | Al | Mo | Nb | V | Ti | B | P | S | N |
|---|---|---|---|---|---|---|---|---|---|---|---|---|---|
| Ex. 1 | 0.18 | 0.58 | 1.40 | 1.60 | 0.25 | 0.020 | / | 0.010 | 0.015 | 0.0008 | 0.006 | 0.003 | 0.0010 |
| Ex. 2 | 0.14 | 0.44 | 1.90 | 2.20 | 1.00 | 0.010 | / | 0.005 | 0.023 | 0.0006 | 0.006 | 0.003 | 0.0030 |
| Ex. 3 | 0.11 | 0.75 | 2.30 | 1.20 | 0.05 | / | / | 0.005 | 0.030 | 0.0003 | 0.008 | 0.004 | 0.0007 |
| Ex. 4 | 0.15 | 0.55 | 1.90 | 1.80 | 0.35 | / | 0.010 | 0.015 | 0.020 | 0.0001 | 0.006 | 0.002 | 0.0008 |
| Ex. 5 | 0.16 | 0.50 | 1.60 | 1.90 | 0.40 | 0.015 | 0.005 | / | 0.020 | 0.0007 | 0.007 | 0.003 | 0.0009 |
| Ex. 6 | 0.14 | 0.46 | 2.05 | 2.35 | 0.48 | 0.010 | 0.010 | 0.025 | / | 0.0005 | 0.005 | 0.003 | 0.0003 |
| Ex. 7 | 0.12 | 0.37 | 2.20 | 2.60 | 0.70 | 0.005 | 0.015 | / | 0.027 | 0.0005 | 0.005 | 0.003 | 0.0005 |
| Ex. 8 | 0.20 | 0.67 | 1.35 | 1.45 | 0.13 | / | 0.023 | 0.010 | 0.005 | 0.0002 | 0.007 | 0.004 | 0.0001 |
| Ex. 9 | 0.20 | 0.40 | 1.30 | 4.00 | 0.66 | / | / | / | / | / | 0.008 | 0.002 | 0.0013 |
| Ex. 10 | 0.21 | 0.31 | 1.10 | 2.70 | 0.95 | 0.015 | / | 0.027 | 0.005 | 0.0008 | 0.008 | 0.003 | 0.0017 |
| Ex. 11 | 0.15 | 0.68 | 2.10 | 0.50 | 0.14 | 0.023 | 0.010 | / | 0.005 | 0.0005 | 0.008 | 0.003 | 0.0019 |
| Ex. 12 | 0.19 | 0.47 | 1.50 | 3.00 | 0.53 | 0.010 | 0.025 | 0.010 | / | 0.0008 | 0.007 | 0.003 | 0.0025 |
| Ex. 13 | 0.10 | 0.30 | 2.50 | 3.00 | 0.80 | 0.001 | | 0.015 | 0.030 | / | 0.004 | 0.004 | 0.0027 |
| Ex. 14 | 0.22 | 0.76 | 1.05 | 1.05 | 0.04 | 0.015 | 0.027 | 0.005 | / | / | 0.006 | 0.004 | 0.0029 |
| Ex. 15 | 0.13 | 0.74 | 2.30 | 1.40 | 0.09 | 0.027 | 0.005 | 0.015 | / | 0.0004 | 0.007 | 0.003 | 0.0002 |
| Ex. 16 | 0.17 | 0.45 | 1.65 | 2.10 | 0.50 | 0.005 | / | 0.020 | 0.015 | 0.0010 | 0.005 | 0.002 | 0.0008 |
| Ex. 17 | 0.10 | 0.79 | 2.50 | 1.10 | 0.04 | 0.030 | 0.001 | / | 0.015 | 0.0003 | 0.006 | 0.004 | 0.0004 |
| Ex. 18 | 0.19 | 0.38 | 1.35 | 2.40 | 0.65 | / | 0.005 | 0.023 | 0.010 | 0.0009 | 0.004 | 0.002 | 0.0014 |
| Ex. 19 | 0.18 | 0.60 | 1.65 | 1.75 | 0.28 | 0.005 | 0.020 | 0.015 | / | / | 0.008 | 0.004 | 0.0018 |
| Ex. 20 | 0.13 | 0.65 | 2.10 | 1.50 | 0.20 | 0.010 | 0.010 | 0.010 | 0.025 | 0.0002 | 0.007 | 0.004 | 0.0028 |
| Ex. 21 | 0.10 | 0.32 | 2.45 | 2.95 | 0.98 | / | 0.015 | 0.030 | 0.001 | 0.0007 | 0.007 | 0.003 | 0.0022 |
| Ex. 22 | 0.21 | 0.33 | 1.10 | 5.00 | 0.79 | / | 0.030 | 0.001 | 0.015 | 0.0010 | 0.005 | 0.002 | 0.0024 |
| Ex. 23 | 0.12 | 0.39 | 2.25 | 2.65 | 0.63 | / | / | / | / | / | 0.006 | 0.003 | 0.0016 |
| Ex. 24 | 0.18 | 0.54 | 1.70 | 2.50 | 0.40 | 0.015 | 0.020 | / | 0.010 | 0.0007 | 0.006 | 0.003 | 0.0010 |
| Ex. 25 | 0.16 | 0.53 | 1.85 | 2.05 | 0.33 | / | 0.015 | 0.020 | 0.010 | 0.0004 | 0.004 | 0.003 | 0.0016 |
| Ex. 26 | 0.20 | 0.69 | 1.20 | 1.30 | 0.10 | 0.025 | 0.010 | / | 0.010 | 0.0009 | 0.007 | 0.003 | 0.0024 |
| Ex. 27 | 0.17 | 0.61 | 1.90 | 2.00 | 0.27 | 0.020 | 0.015 | 0.005 | / | 0.0006 | 0.005 | 0.003 | 0.0028 |
| Ex. 28 | 0.22 | 0.79 | 1.00 | 1.00 | 0.03 | 0.030 | / | / | 0.005 | 0.0010 | 0.008 | 0.002 | 0.0030 |
| CEx. 1 | ***0.24*** | ***1.10*** | 2.30 | / | 0.28 | 0.010 | 0.010 | 0.010 | 0.025 | 0.0003 | 0.007 | 0.004 | 0.0035 |
| CEx. 2 | 0.20 | 0.30 | 1.30 | / | 0.13 | / | 0.010 | 0.015 | 0.020 | / | 0.006 | 0.002 | 0.0014 |
| CEx. 3 | 0.16 | 0.50 | 1.70 | / | 0.04 | 0.005 | / | 0.020 | 0.015 | 0.0001 | 0.005 | 0.002 | 0.0003 |
| CEx. 4 | 0.10 | 0.70 | 1.90 | / | 0.79 | / | 0.005 | 0.023 | 0.010 | 0.0010 | 0.004 | 0.002 | 0.0026 |

Table 2-1 and Table 2-2 listed the specific process parameters for the ultra-high-strength steel having a coating of Examples 1-28 and the comparative steel of Comparative Examples 1-4.

In the Table 2-1, the mass percentage of FeO and Fe₃O₄ in the oxide scale on surface of the strip steel after hot rolling based on the mass of the oxide scale (proportion of (FeO+ Fe₃O₄)) was determined by X-ray diffraction (XRD).

**Table 2-1.**

| No. | Heating temperature of slab (°C) | Thickness of oxide scale of hot rolled coil (µm) | Proportion of (FeO+ Fe₃O₄) (%) | Rolling-end temperature of hot rolling (°C) | Coiling temperature of hot rolled coil (°C) |
|---|---|---|---|---|---|
| Ex. 1 | 1205 | 2.7 | 35.8 | 910 | 465 |
| Ex. 2 | 1235 | 2.5 | 49.5 | 903 | 496 |
| Ex. 3 | 1215 | 2.2 | 25.6 | 930 | 530 |
| Ex. 4 | 1240 | 3.5 | 42.3 | 865 | 475 |
| Ex. 5 | 1210 | 4.0 | 21.7 | 860 | 450 |
| Ex. 6 | 1230 | 3.7 | 33.5 | 920 | 600 |
| Ex. 7 | 1300 | 2.5 | 37.8 | 870 | 550 |
| Ex. 8 | 1200 | 3.3 | 27.5 | 910 | 500 |
| Ex. 9 | 1215 | 2.1 | 42.3 | 900 | 590 |
| Ex. 10 | 1245 | 3.9 | 45.9 | 880 | 510 |
| Ex. 11 | 1225 | 2.8 | 17.3 | 890 | 520 |
| Ex. 12 | 1220 | 1.5 | 23.8 | 885 | 580 |
| Ex. 13 | 1290 | 2.6 | 35.7 | 875 | 575 |
| Ex. 14 | 1240 | 2.8 | 46.8 | 889 | 565 |
| Ex. 15 | 1235 | 3.4 | 42.2 | 895 | 555 |
| Ex. 16 | 1240 | 2.9 | 36.8 | 897 | 525 |
| Ex. 17 | 1225 | 3.7 | 27.3 | 875 | 535 |
| Ex. 18 | 1265 | 3.2 | 29.5 | 882 | 490 |
| Ex. 19 | 1210 | 1.8 | 26.4 | 890 | 515 |
| Ex. 20 | 1205 | 2.4 | 23.8 | 895 | 535 |
| Ex. 21 | 1200 | 1.1 | 23.6 | 863 | 480 |
| Ex. 22 | 1210 | 2.7 | 35.4 | 878 | 470 |
| Ex. 23 | 1240 | 1.8 | 47.9 | 899 | 510 |
| Ex. 24 | 1235 | 1.2 | 35.2 | 915 | 520 |
| Ex. 25 | 1225 | 2.6 | 28.3 | 920 | 550 |
| Ex. 26 | 1290 | 3.3 | 22.5 | 908 | 545 |
| Ex. 27 | 1230 | 3.5 | 24.3 | 915 | 565 |
| Ex. 28 | 1210 | 3.1 | 27.8 | 920 | 585 |
| CEx. 1 | 1220 | 2.8 | 33.6 | 910 | 550 |
| CEx. 2 | 1240 | 3.5 | 38.7 | 905 | 530 |
| CEx. 3 | 1215 | 1.6 | 41.5 | 915 | 560 |
| CEx. 4 | 1230 | 2.2 | 29.1 | 890 | 540 |

| | | | | | |
|---|---|---|---|---|---|
| Note: in the above Table 2-1, "proportion of (FeO+ Fe₃O₄)" referred to the mass percentage of FeO and Fe₃O₄ in the oxide scale on surface of the strip steel after hot rolling, based on the mass of the oxide scale. | | | | | |

**Table 2-2.**

| No. | Cold rolling reduction rate (%) | Annealing temperature (°C) | Slow cooling rate (°C/s) | Cooling-start temperature of rapid cooling (°C) | Cooling-end temperature of rapid cooling (°C) | Rapid cooling rate (°C/s) | Re-heating temperature (°C) | Holding time of re-heating (s) |
|---|---|---|---|---|---|---|---|---|
| Ex. 1 | 0 | 830 | 10 | 700 | 200 | 450 | 360 | 600 |
| Ex. 2 | 0 | 820 | 3 | 730 | 240 | 410 | 460 | 50 |
| Ex. 3 | 40 | 870 | 7 | 750 | 210 | 460 | 370 | 500 |
| Ex. 4 | 60 | 835 | 5 | 770 | 250 | 420 | 450 | 80 |
| Ex. 5 | 45 | 860 | 4 | 720 | 290 | 50 | 380 | 400 |
| Ex. 6 | 55 | 855 | 9 | 715 | 220 | 350 | 440 | 140 |
| Ex. 7 | 50 | 840 | 6 | 705 | 230 | 100 | 390 | 350 |
| Ex. 8 | 52 | 800 | 8 | 725 | 300 | 300 | 430 | 180 |
| Ex. 9 | 0 | 810 | 9 | 735 | 280 | 490 | 400 | 300 |
| Ex. 10 | 0 | 920 | 6 | 755 | 270 | 500 | 420 | 220 |
| Ex. 11 | 43 | 910 | 3 | 765 | 205 | 390 | 410 | 260 |
| Ex. 12 | 58 | 880 | 5 | 745 | 295 | 380 | 405 | 295 |
| Ex. 13 | 0 | 900 | 7 | 704 | 215 | 470 | 415 | 240 |
| Ex. 14 | 0 | 910 | 4 | 716 | 255 | 430 | 428 | 300 |
| Ex. 15 | 44 | 845 | 8 | 728 | 285 | 480 | 425 | 300 |
| Ex. 16 | 56 | 855 | 10 | 720 | 245 | 440 | 418 | 230 |
| Ex. 17 | 0 | 843 | 8 | 715 | 275 | 445 | 423 | 225 |
| Ex. 18 | 0 | 852 | 6 | 755 | 235 | 485 | 413 | 250 |
| Ex. 19 | 48 | 838 | 7 | 770 | 265 | 475 | 408 | 290 |
| Ex. 20 | 57 | 857 | 5 | 745 | 225 | 460 | 403 | 300 |
| Ex. 21 | 49 | 864 | 9 | 735 | 253 | 150 | 398 | 340 |
| Ex. 22 | 54 | 915 | 3 | 765 | 218 | 250 | 393 | 380 |
| Ex. 23 | 58 | 905 | 4 | 754 | 257 | 200 | 387 | 420 |
| Ex. 24 | 50 | 918 | 6 | 749 | 263 | 350 | 383 | 460 |
| Ex. 25 | 0 | 903 | 7 | 736 | 277 | 435 | 378 | 500 |
| Ex. 26 | 0 | 896 | 9 | 728 | 283 | 495 | 363 | 590 |
| Ex. 27 | 46 | 858 | 10 | 714 | 297 | 425 | 368 | 570 |
| Ex. 28 | 44 | 846 | 5 | 718 | 293 | 415 | 372 | 540 |
| CEx. 1 | 35 | 830 | 7 | 720 | 255 | 445 | ***480*** | 180 |
| CEx. 2 | 0 | 810 | 5 | 715 | 265 | ***585*** | 400 | 300 |
| CEx. 3 | 55 | 870 | 4 | 705 | 270 | 475 | 430 | 300 |
| CEx. 4 | 0 | 835 | 9 | 735 | 280 | 460 | 401 | 180 |

| | | | | | | | | |
|---|---|---|---|---|---|---|---|---|
| Note: in above Table 2-2, the cold rolling deformation rate of 0 indicates that no cold rolling was applied, and only pickling was performed. | | | | | | | | |

Before the plating process of the above step (6), the inventor sampled the ultra-high-strength steel substrate having a coating of Examples 1-28 obtained after the continuous annealing process of step (5) and the comparative steel substrate of Comparative Examples 1-4, and conducted microstructure observations on the substrate of each Example and Comparative Example. The results of microstructure observation of the substrate of each Example and Comparative Example were listed in Table 3 below.

Table 3 listed the result of microstructure observation of the ultra-high-strength steel substrate having a coating in Examples 1-28 and the comparative steel substrate in Comparative Examples 1-4.

The observation and determination methods of the microstructure were as follows:
The volume fractions of ferrite and martensite were determined by metallographic analysis.

The grain size and volume fractions of ferrite were determined by metallographic analysis.

The average grain size of residual austenite was determined by metallographic analysis.

The average C content in residual austenite was determined using a Castaing electron probe microanalysis (EPMA).

**Table 3.**

| No. | Fraction of ferrite (%) | Fraction of martensite (%) | Volume fractions of ferrite having a grain size of ≤10µm (%) | Volume fractions of ferrite having a grain size of ≤5µm (%) | Average grain size of residual austenite (µm) | C content in residual austenite (%) |
|---|---|---|---|---|---|---|
| Ex. 1 | 25.25 | 64.67 | 95.78 | 73.87 | 1.1 | 1.14 |
| Ex. 2 | 26.31 | 63.34 | 93.64 | 72.69 | 1.3 | 1.21 |
| Ex. 3 | 26.18 | 63.58 | 94.56 | 72.58 | 1.5 | 1.23 |
| Ex. 4 | 25.78 | 63.79 | 94.37 | 73.24 | 1.9 | 1.15 |
| Ex. 5 | 43.11 | 45.65 | 85.23 | 57.43 | 0.8 | 1.02 |
| Ex. 6 | 41.25 | 47.21 | 85.98 | 56.89 | 0.4 | 1.04 |
| Ex. 7 | 44.59 | 45.32 | 86.76 | 57.65 | 0.3 | 1.03 |
| Ex. 8 | 42.76 | 46.45 | 87.33 | 57.12 | 0.6 | 1.05 |
| Ex. 9 | 28.45 | 59.87 | 91.22 | 66.34 | 0.9 | 1.26 |
| Ex. 10 | 30.22 | 58.64 | 92.56 | 65.67 | 0.7 | 1.22 |
| Ex. 11 | 28.43 | 60.65 | 92.43 | 65.87 | 1.0 | 1.20 |
| Ex. 12 | 30.56 | 59.25 | 92.48 | 66.18 | 1.2 | 1.18 |
| Ex. 13 | 28.34 | 61.25 | 94.52 | 69.75 | 1.4 | 1.28 |
| Ex. 14 | 28.11 | 62.11 | 94.67 | 69.24 | 1.6 | 1.27 |
| Ex. 15 | 27.78 | 61.56 | 94.74 | 69.38 | 1.8 | 1.23 |
| Ex. 16 | 27.56 | 61.23 | 94.83 | 68.54 | 2.0 | 1.26 |
| Ex. 17 | 32.97 | 56.32 | 92.78 | 67.89 | 1.7 | 1.21 |
| Ex. 18 | 34.23 | 55.68 | 92.43 | 67.78 | 1.8 | 1.18 |
| Ex. 19 | 34.54 | 55.34 | 92.65 | 67.56 | 1.4 | 1.16 |
| Ex. 20 | 34.87 | 54.98 | 92.47 | 66.87 | 1.3 | 1.17 |
| Ex. 21 | 40.88 | 48.33 | 88.76 | 59.87 | 1.5 | 1.08 |
| Ex. 22 | 39.68 | 49.11 | 87.69 | 59.63 | 1.3 | 1.09 |
| Ex. 23 | 39.12 | 48.76 | 88.45 | 58.45 | 1.7 | 1.06 |
| Ex. 24 | 40.85 | 48.34 | 87.35 | 58.93 | 1.9 | 1.05 |
| Ex. 25 | 37.66 | 51.89 | 90.55 | 63.77 | 0.5 | 1.09 |
| Ex. 26 | 36.64 | 52.45 | 90.63 | 62.95 | 0.8 | 1.08 |
| Ex. 27 | 37.25 | 52.23 | 90.12 | 62.87 | 0.6 | 1.09 |
| Ex. 28 | 38.27 | 51.69 | 90.67 | 63.43 | 0.7 | 1.11 |
| CEx. 1 | 40.67 | 48.34 | ***83.75*** | 59.87 | 1.2 | 1.15 |
| CEx. 2 | ***22.87*** | ***66.76*** | 90.23 | 58.92 | ***2.5*** | 1.19 |
| CEx. 3 | 41.73 | 46.23 | 89.34 | 58.34 | 1.3 | 0.93 |
| CEx. 4 | 42.55 | 47.12 | 88.94 | ***49.45*** | 1.1 | 1.17 |

| | | | | | | |
|---|---|---|---|---|---|---|
| Note: The volume fraction of residual austenite not listed in Table 3 was the balance excluding ferrite and martensite. | | | | | | |

As can be seen from the above Table 3 of the present disclosure, the microstructure of the substrate of the steel designed by Examples 1-28 of the present disclosure was: ferrite + martensite + residual austenite. Moreover, the microstructure of the substrate of each Example satisfied the following indexes: the volume fraction of ferrite was 25%~45%, and the volume fraction of martensite was 45%~65%; wherein the volume fraction of ferrite grains having a size of 10 µm or less accounted for ≥85%, and the volume fraction of ferrite grains having a size of 5 µm or less accounted for ≥55%, the average grain size of the residual austenite was ≤2 µm, and the average C content in the residual austenite was ≥ 1.0%.

In addition, the inventors have also tested the mechanical properties of the coated steel plates in each Example and Comparative Example, and the test results are listed in Table 4 below. When the mechanical properties of the coated steel plates of each Example and Comparative Example were tested, the relevant mechanical properties testing methods were as follows:
Tensile property test: tensile test was performed according to GB/T228.1-2010 Metallic materials-Tensile testing-Part 1: Method of test at room temperature, to test the yield strength, tensile strength, uniform elongation and elongation at break of the ultra-high-strength steel having a coating obtained in Examples 1-28 and the comparative steel in Comparative Examples 1-4.

**Table 4.**

| No. | Yield strength (MPa) | Tensile strength (MPa) | Uniform elongation (%) | Elongation at break (%) |
|---|---|---|---|---|
| Ex. 1 | 755 | 1080 | 15.6 | 23.1 |
| Ex. 2 | 780 | 1090 | 16.1 | 24.8 |
| Ex. 3 | 765 | 1085 | 15.9 | 23.1 |
| Ex. 4 | 845 | 1125 | 14.7 | 22.8 |
| Ex. 5 | 795 | 1105 | 15.2 | 23.2 |
| Ex. 6 | 790 | 1110 | 15.4 | 23.4 |
| Ex. 7 | 825 | 1115 | 15.1 | 23.9 |
| Ex. 8 | 820 | 1120 | 15.3 | 23.3 |
| Ex. 9 | 815 | 1115 | 14.8 | 22.6 |
| Ex. 10 | 835 | 1135 | 14.6 | 22.4 |
| Ex. 11 | 830 | 1140 | 14.9 | 22.9 |
| Ex. 12 | 820 | 1110 | 15.2 | 23.3 |
| Ex. 13 | 800 | 1090 | 15.8 | 23.5 |
| Ex. 14 | 785 | 1045 | 16.2 | 24.8 |
| Ex. 15 | 795 | 1075 | 15.7 | 23.4 |
| Ex. 16 | 790 | 1090 | 15.5 | 23.8 |
| Ex. 17 | 770 | 1070 | 15.6 | 24.1 |
| Ex. 18 | 650 | 980 | 13.2 | 15.0 |
| Ex. 19 | 785 | 1105 | 15.1 | 23.9 |
| Ex. 20 | 780 | 1110 | 15.3 | 23.5 |
| Ex. 21 | 750 | 1030 | 16.2 | 24.7 |
| Ex. 22 | 600 | 1050 | 14.1 | 18.2 |
| Ex. 23 | 765 | 1060 | 16.4 | 24.9 |
| Ex. 24 | 610 | 985 | 13.0 | 15.2 |
| Ex. 25 | 810 | 1090 | 15.8 | 23.9 |
| Ex. 26 | 805 | 1080 | 15.9 | 23.3 |
| Ex. 27 | 810 | 1085 | 15.7 | 23.6 |
| Ex. 28 | 800 | 1075 | 15.9 | 24.4 |
| CEx. 1 | 765 | 1050 | 15.7 | 23.5 |
| CEx. 2 | 780 | ***970*** | 15.4 | 25.4 |
| CEx. 3 | 770 | 1060 | ***12.9*** | 14.8 |
| CEx. 4 | 870 | 1165 | 15.8 | 24.3 |

As can be seen from the above Table 4, the steel plate in Examples 1-28 of the present disclosure had very excellent mechanical properties: a yield strength ≥600 MPa, a tensile strength ≥980 MPa, a uniform elongation ≥13%, and an elongation at break ≥15%.

Moreover, in order to verify that the final product of the ultra-high-strength steel having a coating prepared in Examples 1-28 had fairly excellent low spot-welding crack sensitivity, the inventors took samples respectively for the final product of the ultra-high-strength steel having a coating of Examples 1-28 and the comparative steel plate of Comparative Examples 1-4, and conducted welding tests with spot-welding process on the final product of each Example and Comparative Example. The relevant spot-welding process parameters were listed in Table 5 below.

Table 5 listed the specific spot-welding process parameters of the ultra-high-strength steel having a coating of Examples 1-28 and the comparative steel plate of Comparative Example 1-4.

**Table 5.**

| No. | Steel plate thickness (mm) | Electrode pressure (kN) | Number of pulses | Time for 1 pulse (ms) | Cooling time (ms) | Total welding time (ms) | Keeping time (ms) |
|---|---|---|---|---|---|---|---|
| Ex. 1 | 1.0 | 2.6 | 1 | 230 | 0 | 230 | 250 |
| Ex. 2 | 1.0 | 2.6 | 1 | 230 | 0 | 230 | 250 |
| Ex. 3 | 1.2 | 2.6 | 1 | 270 | 0 | 270 | 250 |
| Ex. 4 | 1.2 | 2.6 | 1 | 270 | 0 | 270 | 250 |
| Ex. 5 | 1.8 | 3.6 | 3 | 130 | 40 | 470 | 250 |
| Ex. 6 | 1.8 | 3.6 | 3 | 130 | 40 | 470 | 250 |
| Ex. 7 | 1.4 | 3.6 | 3 | 120 | 20 | 400 | 250 |
| Ex. 8 | 1.4 | 3.6 | 3 | 120 | 20 | 400 | 250 |
| Ex. 9 | 1.5 | 3.6 | 3 | 120 | 20 | 400 | 250 |
| Ex. 10 | 1.5 | 3.6 | 3 | 120 | 20 | 400 | 250 |
| Ex. 11 | 1.3 | 3.6 | 3 | 120 | 20 | 400 | 250 |
| Ex. 12 | 1.3 | 3.6 | 3 | 120 | 20 | 400 | 250 |
| Ex. 13 | 2.0 | 4.0 | 4 | 120 | 40 | 600 | 250 |
| Ex. 14 | 2.0 | 4.0 | 4 | 120 | 40 | 600 | 250 |
| Ex. 15 | 1.6 | 3.6 | 3 | 130 | 40 | 470 | 250 |
| Ex. 16 | 1.6 | 3.6 | 3 | 130 | 40 | 470 | 250 |
| Ex. 17 | 1.85 | 3.6 | 3 | 130 | 40 | 470 | 250 |
| Ex. 18 | 1.85 | 3.6 | 3 | 130 | 40 | 470 | 250 |
| Ex. 19 | 1.85 | 3.6 | 3 | 130 | 40 | 470 | 250 |
| Ex. 20 | 1.85 | 3.6 | 3 | 130 | 40 | 470 | 250 |
| Ex. 21 | 1.2 | 2.6 | 1 | 270 | 0 | 270 | 250 |
| Ex. 22 | 1.2 | 2.6 | 1 | 270 | 0 | 270 | 250 |
| Ex. 23 | 1.2 | 2.6 | 1 | 270 | 0 | 270 | 250 |
| Ex. 24 | 1.2 | 2.6 | 1 | 270 | 0 | 270 | 250 |
| Ex. 25 | 1.4 | 3.6 | 3 | 120 | 20 | 400 | 250 |
| Ex. 26 | 1.4 | 3.6 | 3 | 120 | 20 | 400 | 250 |
| Ex. 27 | 1.4 | 3.6 | 3 | 120 | 20 | 400 | 250 |
| Ex. 28 | 1.4 | 3.6 | 3 | 120 | 20 | 400 | 250 |
| CEx. 1 | 1.2 | 2.6 | 1 | 270 | 0 | 270 | 250 |
| CEx. 2 | 1.5 | 3.6 | 3 | 120 | 20 | 400 | 250 |
| CEx. 3 | 1.4 | 3.6 | 3 | 120 | 20 | 400 | 250 |
| CEx. 4 | 1.6 | 3.6 | 3 | 130 | 40 | 470 | 250 |

In the spot-welding process, each of tensile shear (TSS) specimen, cross tensile (CTS) specimen, metallographic specimen was welded under each welding current. The joint bearing capacity of TSS, CTS were measured by a tensile testing machine according to ISO 14273-2016 and ISO 14272-2016 standards. The results were shown in Table 6 below.

For the metallographic samples, the coating on the surface of the joint was removed with dilute hydrochloric acid first, and the distribution and direction of cracks on the surface of solder joint were observed under the microscope. The cross-section that passes through the nugget center where the most surface cracks could be cut was selected as the metallographic section of the joint, and the cross-section was sampled by wire cutting, wherein the cross-section included all the welding characteristic areas of the spot-welding joint. The surface of the intercepted sample was washed to prevent the interference of foreign matter on the test results, and the washed sample was dried. The dried sample was mounted, ground and polished, and measured under a metallographic microscope, and the maximum crack length was filled in Table 6.

Table 6 listed the mechanical properties of the solder joints and the test results of the cracks of solder joints for the ultra-high-strength steel having a coating in Examples 1-28 and Comparative Examples 1-4 after spot welding.

**Table 6.**

| No. | Nominal weight of the coating (g/m²) | Tensile shear force of the joint (kN) | Cross tensile force of the joint (kN) | No welding splash | | Welding splash | |
|---|---|---|---|---|---|---|---|
| | | | | Maximum crack length (µm) | Maximum crack length /steel plate thickness (%) | Maximum crack length (µm) | Maximum crack length /steel plate thickness (%) |
| Ex. 1 | 62/66 | ≥10 | ≥7.8 | 0 | 0 | 38.6 | 3.86 |
| Ex. 2 | 67/63 | ≥10 | ≥7.8 | 0 | 0 | 39.3 | 3.93 |
| Ex. 3 | 68/69 | ≥12 | ≥8.2 | 0 | 0 | 46.1 | 3.84 |
| Ex. 4 | 74/76 | ≥12 | ≥8.2 | 0 | 0 | 47.4 | 3.95 |
| Ex. 5 | 86/86 | ≥21 | ≥13.8 | 0 | 0 | 0 | 0 |
| Ex. 6 | 72/73 | ≥21 | ≥13.8 | 0 | 0 | 0 | 0 |
| Ex. 7 | 70/71 | ≥15 | ≥11 | 0 | 0 | 0 | 0 |
| Ex. 8 | 68/68 | ≥15 | ≥11 | 0 | 0 | 0 | 0 |
| Ex. 9 | 65/67 | ≥16.5 | ≥11 | 0 | 0 | 35.3 | 2.35 |
| Ex. 10 | 68/69 | ≥16.5 | ≥11 | 0 | 0 | 36.3 | 2.42 |
| Ex. 11 | 65/67 | ≥13.6 | ≥10.5 | 0 | 0 | 29.8 | 2.29 |
| Ex. 12 | 69/69 | ≥13.6 | ≥10.5 | 0 | 0 | 30.8 | 2.37 |
| Ex. 13 | 71/72 | ≥24 | ≥13.8 | 0 | 0 | 66.4 | 3.32 |
| Ex. 14 | 71/73 | ≥24 | ≥13.8 | 0 | 0 | 69.0 | 3.45 |
| Ex. 15 | 72/74 | ≥18 | ≥11.8 | 0 | 0 | 54.1 | 3.38 |
| Ex. 16 | 75/73 | ≥18 | ≥11.8 | 0 | 0 | 54.7 | 3.42 |
| Ex. 17 | 73/70 | ≥22 | ≥13.8 | 0 | 0 | 26.8 | 1.45 |
| Ex. 18 | 71/72 | ≥22 | ≥13.8 | 0 | 0 | 25.7 | 1.39 |
| Ex. 19 | 70/69 | ≥22 | ≥13.8 | 0 | 0 | 24.4 | 1.32 |
| Ex. 20 | 75/75 | ≥22 | ≥13.8 | 0 | 0 | 26.1 | 1.41 |
| Ex. 21 | 76/77 | ≥12 | ≥8.2 | 0 | 0 | 4.4 | 0.37 |
| Ex. 22 | 87/85 | ≥12 | ≥8.2 | 0 | 0 | 4.7 | 0.39 |
| Ex. 23 | 66/67 | ≥12 | ≥8.2 | 0 | 0 | 5.4 | 0.45 |
| Ex. 24 | 72/73 | ≥12 | ≥8.2 | 0 | 0 | 4.2 | 0.35 |
| Ex. 25 | 74/74 | ≥15 | ≥11 | 0 | 0 | 34.4 | 2.46 |
| Ex. 26 | 76/77 | ≥15 | ≥11 | 0 | 0 | 33.3 | 2.38 |
| Ex. 27 | 73/72 | ≥15 | ≥11 | 0 | 0 | 34.0 | 2.43 |
| Ex. 28 | 73/73 | ≥15 | ≥11 | 0 | 0 | 33.0 | 2.36 |
| CEx. 1 | 64/65 | ≥12 | ≥8.2 | 42.4 | 3.53 | 231.4 | ***19.28*** |
| CEx. 2 | 86/86 | ≥16.5 | ≥11 | 56.3 | 3.75 | 194.7 | ***12.98*** |
| CEx. 3 | 75/75 | ≥12 | ≥8.2 | 52.3 | 4.36 | 213.5 | ***17.79*** |
| CEx. 4 | 72/73 | ≥18 | ≥11.8 | 69.2 | 4.33 | 292.9 | ***18.31*** |

It could be seen from Table 6 that for Examples 1-28 in the present disclosure, when the welding current was less than the current when splash occurred, there was no surface crack in the welded solder joint (hereafter referred to as "no welding splash"); when the welding current was larger than the current when splash occurred, the longest surface crack of the welded solder joint(hereafter referred to as "welding splash") was less than 5% of the plate thickness. In contrast, for Comparative Examples 1-4, regardless of whether the welding current was greater than the current when splash occurred, the welded solder joints surface would have cracks, and the surface cracks of the solder joints with welding splash were more serious than those of the solder joints without welding splash, and the ratio of the maximum crack length to the plate thickness was much greater than 5%. Thus, it showed that the ultra-high-strength steel having a coating in each Example of the present disclosure had excellent low sensitivity to cracks on the surface of solder joint while ensuring the performance of the plate.

It should be noted that combinations of the various technical features in this case are not limited to the combinations disclosed in the claims of this case or the combinations disclosed in the specific Examples. All technical features disclosed in this case can be combined freely or associated in any way unless a contradiction occurs.

It should also be noted that the Examples listed above are only specific embodiments of the present disclosure. Obviously, the present disclosure is not limited to the above Examples, and changes or modifications made thereto can be directly derived from the present disclosure or easily conceived of by those skilled in the art, all of which fall within the protection scope of the present disclosure.

## Claims

1. An ultra-high-strength steel having a coating with excellent spot-welding performance, which comprises a steel substrate and a zinc-containing coating on the surface of the steel substrate, wherein the steel substrate comprises Fe and unavoidable impurity elements, and the steel substrate further comprises the following chemical elements in a mass percentage: C: 0.10~0.22%; Si: 0.30~0.79%; Mn: 1.00~2.50%; Cr: 0.50~5.00%; Al: 0.03~1.0%.

2. The ultra-high-strength steel having a coating of claim 1, wherein the steel substrate comprises each chemical element in a mass percentage as follows:
C: 0.10~0.22%; Si: 0.30~0.79%; Mn: 1.00~2.50%; Cr: 0.50~5.00%; Al: 0.03~1.0%; with a balance of Fe and unavoidable impurity elements.

3. The ultra-high-strength steel having a coating of claim 1 or 2, wherein the mass percentage of each chemical element of the steel substrate satisfies at least one of the following items:
C: 0.15~0.20%;
Si: 0.50~0.79%;
Mn: 1.00~2.00%;
Cr: 1.00~3.00%.

4. The ultra-high-strength steel having a coating of claim 1 or 2, wherein the mass percentage of each chemical element of the steel substrate satisfies at least one of the following items:
0<Mo≤0.03%;
0<Nb≤0.03%;
0<Ti≤0.03%;
0<V≤0.03%;
0<B≤0.001%.

5. The ultra-high-strength steel having a coating of claim 1 or 2, wherein the mass percentage of the unavoidable impurity elements of the steel substrate satisfies:
P≤0.01%, S≤0.01%, N≤0.003%.

6. The ultra-high-strength steel having a coating of claim 1 or 2, wherein the microstructure of the steel substrate is ferrite + martensite + residual austenite.

7. The ultra-high-strength steel having a coating of claim 6, wherein the volume fraction of ferrite is 25%~45%; and/or the volume fraction of martensite is 45%~65%.

8. The ultra-high-strength steel having a coating of claim 6, wherein in ferrite, the volume of grains having a size of 10 µm or less accounts for ≥85%, and the volume of grains having a size of 5 µm or less accounts for ≥55%.

9. The ultra-high-strength steel having a coating of claim 6, wherein the residual austenite has an average grain size of ≤ 2 µm; and/or the residual austenite has an average C content of ≥1.0%.

10. The ultra-high-strength steel having a coating of claim 1 or 2, wherein when spot-welding is adopted for welding, if cracks on the surface of solder joint are generated, the maximum depth of the cracks on the surface of solder joint is less than 5% of the plate thickness.

11. The ultra-high-strength steel having a coating of claim 1 or 2, wherein the mechanical properties of the ultra-high-strength steel having a coating satisfy: a yield strength of 600MPa~850MPa, a tensile strength of 980MPa~1150MPa, a uniform elongation of no less than 13%, and an elongation at break of no less than 15%.

12. The ultra-high-strength steel having a coating of claim 1 or 2, wherein the coating is a pure zinc coating, a zinc-iron alloy coating, a zinc-aluminum-magnesium coating or an aluminum-zinc coating.

13. A manufacturing method for the ultra-high-strength steel having a coating according to any one of claims 1-12, which comprises steps of:
(1) smelting and continuously casting;
(2) heating;
(3) hot-rolling: wherein the thickness of oxide scale on the surface of the strip steel after hot rolling is controlled at ≤4µm, and the mass percentage of FeO+ Fe₃O₄ in the oxide scale on the surface of the strip steel after hot rolling is ≤50wt%;
(4) pickling, or pickling + cold rolling;
(5) continuous annealing: wherein the steel is annealed at 800~920 °C, then slowly cooled to 700~770 °C at a cooling rate of 3~10 °C/s; then rapidly cooled to 200~300°C with a cooling rate of 50~500°C/s; then re-heated to 360~460°C, held for 50~600s; and finally cooled to room temperature;
(6) plating a zinc-containing coating.

14. The manufacturing method according to claim 13, wherein the manufacturing method has one or more characteristics selected from:
wherein in step (2), a slab is heated to 1200~1300°C;
wherein in step (3), a rolling-end temperature is controlled at 860~930°C, a coiling temperature is controlled at 450~600°C;
wherein in step (4), when pickling + cold rolling is adopted, a cold rolling deformation rate is controlled at 40%~60%.

15. The manufacturing method according to claim 13, wherein the annealing process parameters of step (5) satisfy at least one of the following items:
an annealing temperature of 820~870°C;
slowly cooled to 700~730°C at a cooling rate of 3~10°C/s;
rapidly cooled to 250~300°C;
re-heated to 400~430°C after rapid cooling, held for 180~300s;
the volume content of hydrogen in the reducing atmosphere in the continuous annealing furnace is controlled at 10~15%.
